Europäisches Patentamt

European Patent Office

Office européen des brevets

(19)

(11) **EP 1 067 718 B1**

(12) **FASCICULE DE BREVET EUROPEEN**

(45) Date de publication et mention
de la délivrance du brevet:
**03.09.2003 Bulletin 2003/36**

(51) Int Cl.[7]: **H04B 10/17**, H04B 10/18

(21) Numéro de dépôt: **00401923.8**

(22) Date de dépôt: **05.07.2000**

(54) **Utilisation d'isolateurs pour surmonter les limitations a l'amplification raman provenant de la diffusion rayleigh**

Isolatorverwendung zur Überwindung von Ramanverstärkungsbegrenzungen verursacht durch Rayleighstreuung

Isolator use to overcome raman amplification limitations due to rayleigh scattering

(84) Etats contractants désignés:
**AT BE CH CY DE DK ES FI FR GB GR IE IT LI LU MC NL PT SE**

(30) Priorité: **08.07.1999 FR 9908844**

(43) Date de publication de la demande:
**10.01.2001 Bulletin 2001/02**

(73) Titulaire: **ALCATEL**
**75008 Paris (FR)**

(72) Inventeurs:
• **Brandon, Eric**
**92340 Bourg la Reine (FR)**
• **Blondel, Jean-Pierre**
**78530 Buc (FR)**
• **Le Roux, Patrice**
**91310 Montlhery (FR)**
• **Toullier, Denis**
**45400 Fleury les Aubrais (FR)**

(74) Mandataire: **Lamoureux, Bernard et al**
**Compagnie Financière Alcatel**
**Département de Propriété Industrielle,**
**5, rue Noel Pons**
**92734 Nanterre Cedex (FR)**

(56) Documents cités:
EP-A- 0 789 432          WO-A-98/42088
US-A- 5 898 714

• BLONDEL J -P: "ACHIEVABLE BUDGET IMPROVEMENT WITH RAMAN AMPLIFICATION AND REMOTELYPUMPED POSTAMPLIFICATION AT TRANSMIT SIDE OF 622 MBIT/S AND 2.5 GBIT/S REPEATERLESS SYSTEMS" IEEE PHOTONICS TECHNOLOGY LETTERS,US,IEEE INC. NEW YORK, vol. 7, no. 1, 1 janvier 1995 (1995-01-01), pages 108-110, XP000488133 ISSN: 1041-1135

## Description

La présente invention concerne le domaine des transmissions par fibres optiques, et notamment les systèmes de transmission sans répéteurs. Elle s'applique notamment aux systèmes de transmission à fibre optique, utilisant un multiplexage de longueur d'onde (en anglais "wavelength division multiplexing ou WDM).

Une des solutions connues pour la transmission de signaux dons des fibres optiques consiste à disposer à intervalles réguliers le long du système de transmission des amplificateurs optiques, et notamment des amplificateurs à fibre optique dopée à l'erbium. Une telle solution est par exemple décrite dans Bergano, Long haut WDM transmission using optimum channel modulation : 32 x 5 Gbit/s 9300 km démonstration, OFC'97 post deadline 16. Les distances de transmission dans un tel système sont limitées par le rapport signal sur bruit, et notamment par la présence de bruit d'amplification spontanée (ASE, acronyme de l'anglais "amplification spontaneous noise") généré dans les amplificateurs.

Il a aussi été proposé dans un article Morten Nissov et autres, 100 Gb/s (10x10 Gb/s) WDM transmission over 7200 km using distribution Raman amplification, OFC'97, post deadline palper, d'utiliser dans un système de transmission uniquement une amplification distribuée par effet Raman stimulé (SRS, acronyme de l'anglais "Stimulated Raman Scattering") pour l'amplification à intervalles réguliers du signal. Cette solution permet une amélioration du rapport signal sur bruit d'environ 2 dB par rapport à une solution comparable utilisant uniquement des pompes discrètes. Une description de l'effet Raman est donnée dans l'ouvrage de G. P. Agrawal, Nonlinear Fibre Optics, Academic Press 1980.

P. B. Hansen et autres, Rayleigh scattering limitations in distributed Raman pre-amplifiers, OFC'97 Technical digest, FA2, indique que la diffusion Rayleigh peut constituer une limitation à l'utilisation de l'amplification Raman dans des systèmes de transmission; cet article compare les limitations imposées dans des fibres DSF (acronyme de l'anglais Dispersion Shifted Fibers, fibre à dispersion décalée) et SCF (acronyme de l'anglais Silica Core Fiber, fibre à coeur en silice). Une pompe contra-propagative à 1,1 W est utilisée pour la préamplification Raman. Ce document soulève le problème de la limitation que peut imposer la diffusion Rayleigh à l'amplification Raman, mois ne propose aucune solution pour régler ce problème.

La demande de brevet français FR-A-2 773 655, intitulée "Elimination de la limitation en puissance optique due à l'effet Raman dans les liaisons par fibre optique" propose une solution à la limitation en puissance optique due à l'effet Raman dans les liaisons par fibre optique. Cette demande propose notamment de prévoir dans la fibre des moyens d'atténuation dans la région de longueur d'onde où le signal émis créée du gain Raman. Ces moyens peuvent notamment comprendre des filtres avec le cas échéant des isolateurs optiques si les filtres induisent des réflexions dans la région de gain Roman. La demande de brevet européenne EP-A-789432 propose un système de transmission optique à amplification distribuée par diffusion Raman stimulée dans la fibre de ligne.

L'invention propose une solution au problème de la diffusion Rayleigh; cette solution est simple et efficace. Elle permet de surmonter la limitation imposée à l'amplification Raman par la diffusion Rayleigh.

Plus précisément, l'invention propose un système de transmission par fibre optique, comprenant de la fibre de ligne et des moyens de pompage co-propagatif pour une amplification distribuée par diffusion Raman stimulée dans la fibre de ligne, dans lequel la fibre de ligne présente au moins deux tronçons séparés par un isolateur, caractérisé en ce que la longueur de chacun des tronçons, la puissance de la pompe et la nature de la fibre sont choisies de sorte à satisfaire dans chaque tronçon la relation

$$(Ra)^2 * (Gr)^2 \leq 1$$

où Ra est le coefficient de réflexion Rayleigh du tronçon et Gr est le gain Raman apporté au signal dans le tronçon.

Dans un mode de réalisation, les moyens de pompage sont disposés côté émetteur.

Dans un autre mode de réalisation, un isolateur présente un coefficient de réflexion inférieur au coefficient de réflexion Rayleigh du tronçon de fibre immédiatement en aval.

De préférence, les isolateurs sont des isolateurs à double étage.

D'autres caractéristiques et avantages de l'invention apparaîtront à la lecture de la description qui suit de modes de réalisation de l'invention, donnée à titre d'exemple et en référence aux dessins annexés, dont les dessins montrent :

- figure 1, un graphe du coefficient de réflexion Rayleigh dans une fibre optique, en fonction de la distance de propagation;
- figure 2, un graphe du gain Raman dons une fibre optique, en fonction de la distance de propagation, pour différentes puissances de pompe ;
- figure 3, une représentation schématique d'un système de transmission selon un premier mode de réalisation de l'invention.

L'invention repose sur le fait que la limitation aux puissances de pompes du fait des oscillations provoquées par le gain Raman et la diffusion Rayleigh dépend de la longueur de la fibre. Elle propose donc, pour pouvoir injecter des pompes de plus fortes puissances, de découper un système de transmission par fibre optique en plusieurs tronçons, séparés par des isolateurs. L'utilisation d'isolateurs optiques permet de découper le système de transmission en plusieurs tronçons, du point de vue du coefficient Rayleigh et du gain Raman; aux pertes d'insertion des isolateurs près, le système de transmission n'est pas modifié du point de vue de la propagation des signaux.

L'invention permet de la sorte d'augmenter les puissances de pompes utilisables, et le budget de puissance disponible avec une amplification par effet Raman stimulé.

La relation suivante donne de façon simplifiée la condition d'oscillation dans une fibre optique :

$$(Ra)^2 * (Gr)^2 > 1 \qquad (1)$$

où

Ra est le coefficient de réflexion Rayleigh de la fibre
Gr est le gain Raman apporté au signal dans le segment de fibre.

Pour un système de transmission classique utilisant une fibre de type PSCF (acronyme de l'anglais Pure Silica Core Fibre, fibre à coeur de silice), le coefficient Rayleigh de la fibre est d'environ -32 dB. Le gain maximal autorisé est donc de 32 dB, faute de quoi des oscillations apparaissent.

En première approximation, le coefficient de réflexion Rayleigh d'une fibre optique peut s'exprimer sous la forme ("On the theory of backscattering in single-mode optical fibers", Arthur H. HARTOG et autres, Journal of Lightwave Technology, Vol. LT-2, No 2, April 1984) :

$$R = a * [1 - \exp (-2 * \alpha_s * L)] / (2 * \alpha_s) \qquad (2)$$

où

a est un coefficient dépendant de la nature de la fibre et de la longueur d'onde du signal
$\alpha_s$ est l'atténuation linéique de la fibre à la longueur d'onde du signal
L est la longueur du tronçon de fibre considéré.

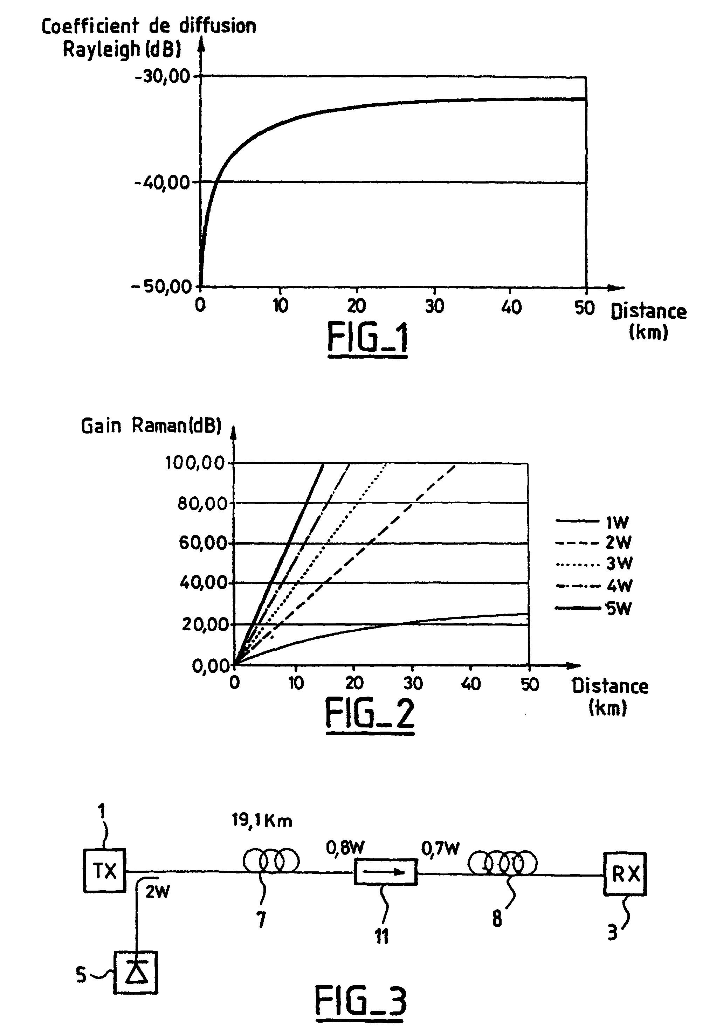

Cette équation montre que l'intensité de la diffusion Rayleigh dépend de la longueur du tronçon de fibre considéré. Lorsque cette longueur est grande - typiquement plus de 100 km - on retrouve la valeur classique de -32 dB pour la PSCF. En revanche, le coefficient de réflexion restera faible si l'on considère une section de fibre de faible longueur. La figure 1 montre l'évolution du coefficient Rayleigh en fonction de la longueur de fibre PSCF considérée.

De la même manière, le gain Raman généré dans une fibre optique dépend de la longueur du tronçon de fibre considéré, suivant la loi (« Nonlinear Fiber Optics », Govind P. AGRAWAL, Academic Press, 1980) :

$$Gr = \exp (g_R * P * L_{eff}) \qquad \{3\}$$

avec

$$L_{eff} = (1 - \exp (-\alpha_p * L))/\alpha_p$$

où

$g_R$ est un coefficient dépendant de la nature de la fibre
P est la puissance de la pompe
$\alpha_p$ est l'atténuation linéique de la fibre à la longueur d'onde de la pompe
L est la longueur du tronçon de fibre considéré.

L'évolution du gain Raman en fonction de la longueur de la fibre est donnée en figure 2 pour plusieurs puissances de pompe, pour une fibre PSCF.

L'invention propose d'exploiter cette dépendance du coefficient Rayleigh à la longueur de la fibre. Elle propose à cet effet de disposer dans la fibre du système de transmission un ou plusieurs isolateurs, de sorte à définir des tronçons distincts, et donc permettre l'injection de pompes plus fortes. Le système de transmission est configuré de sorte à éviter dans chaque tronçon les oscillations provoquées par le gain Raman et la diffusion Rayleigh. On peut aussi tenir compte de la limitation imposée à la puissance de pompe par le bruit généré par la pompe, et par la déplétion correspondante de la pompe.

La figure 3 montre une représentation schématique d'un système de transmission selon l'invention; le système de la figure est un système de transmission à fibre optique sans répéteurs, avec une amplification distribuée par effet Raman stimulé dans la fibre de ligne; apparaissent donc sur la figure l'émetteur TX 1, le récepteur RX 3, et du côté de l'émetteur, une source de pompage 5; cette source de pompage sert à injecter dans la fibre de ligne une lumière de pompage co-propagative, qui assure une amplification par diffusion Raman stimulée.

Comme le montre la figure, la fibre de ligne entre l'émetteur et le récepteur est constituée de plusieurs tronçons de fibres, dons l'exemple deux tronçons 7 et 8en allant de l'émetteur vers le récepteur. Entre les deux tronçons 7 et 8 est prévu un isolateur optique 11. Cet isolateur est disposé de sorte à laisser passer les signaux transmis, comme d'ailleurs la lumière de pompage.

Pour une puissance de pompe donnée, et pour une fibre de ligne présentant des caractéristiques données, la combinaison des formules (1), (2) et (3) ci-dessus fournit une condition d'oscillation, qui est fonction notamment de la longueur du tronçon de fibre considéré. Il est possible, au moins pour certaines valeurs de pompes, de choisir la longueur du tronçon de telle sorte que cette condition ne soit pas remplie.

Dons l'exemple de la figure 3, on dispose d'une source de pompage 5 d'une puissance de 2 W, et on utilise comme fibre de la fibre PSCF. Cette puissance est largement supérieure aux valeurs de puissance de pompage communément utilisées pour de telles fibres.

L'isolateur optique 11 est placé à 19.1 km de la source; pour la fibre choisie, et la puissance de pompe injectée, cette longueur du premier tronçon assure que la condition de l'équation (1) n'est jamais satisfaite, et donc que des oscillations n'apparaissent pas dans la fibre du premier tronçon. La puissance de pompe en sortie en amont de l'isolateur est de 0.8 W, et la puissance en sortie de l'isolateur est de 0.7 W, compte tenu d'une perte d'insertion de l'isolateur de 0,5 dB. La puissance injectée dans le deuxième tronçon n'est pas suffisante pour générer un gain Roman supérieur à 32 dB dans le deuxième tronçon de fibre, ainsi, l'ajout d'isolateurs optiques supplémentaires est inutile.

A titre de comparaison, pour une liaison classique n'utilisant pas d'isolateur, la puissance de pompe est limitée à 1 W environ, pour une fibre PSCF d'une longueur supérieure à environ 100 km. La solution proposée permet d'injecter une pompe de 2 W et permet un gain d'environ 14 km sur la longueur de la liaison.

On pourrait aussi disposer l'isolateur en amont, de sorte à ce que la puissance de pompe injectée dans la fibre soit non plus de 0.7 W, mais soit voisine de 1 W. Ceci ne changerait pas la longueur totale de la liaison : en effet, dans l'exemple de la figure 3, le facteur limitant pour le dimensionnement du premier tronçon est essentiellement la puissance de la pompe injectée, et la déplétion de cette pompe.

L'isolateur 11 présente de préférence un coefficient de réflexion qui est inférieur au coefficient de diffusion Rayleigh dans le tronçon de fibre suivant; à titre d'indication, pour un coefficient de diffusion Rayleigh de - 32 dB, qui est typique pour une fibre du type PSCF, un isolateur à simple étage peut présenter un coefficient de réflexion de - 20 dB, et un isolateur double étage un coefficient de réflexion de - 40 dB.

En effet, si l'on prend en compte le coefficient de réflexion de l'isolateur, la formule (1) ci-dessus pourrait s'écrire en première approximation :

$$(Ra + Ri) * Ra * (Gr)^2 > 1 \qquad (1)$$

où
    Ri est le coefficient de réflexion de l'isolateur.

L'utilisation d'un isolateur présentant un faible coefficient de réflexion permet de la sorte d'éviter encore plus les oscillations dans la fibre.

On comprend de ce qui précède que la puissance de pompe, la nature de la fibre et la longueur de chaque tronçon sont choisis de sorte à éviter l'apparition d'oscillations dons la fibre. Une solution pour concevoir un système de transmission selon l'invention consiste à calculer successivement la longueur de chacun des tronçons, de sorte à éviter de satisfaire la condition sur les oscillations. Ainsi, en partant d'une pompe d'une puissance donnée, on peut calculer connaissant la fibre utilisée la longueur maximale d'un premier tronçon, de sorte à éviter les oscillations. On détermine ensuite la puissance en sortie du premier tronçon, et la puissance injectée dans le deuxième tronçon. Si cette puissance n'est pas suffisante pour provoquer des oscillations, il n'est pas utile de disposer d'autres isolateurs. Si en revanche la puissance injectée dans le deuxième tronçon peut générer des oscillations, on procède comme pour le premier tronçon ou calcul d'une longueur maximale du deuxième tronçon.

On peut aussi procéder en sens inverse, et à partir d'un système existant, ajouter des longueurs d'un ou plusieurs tronçons à ajouter, de sorte à dans chacun des tronçons éviter les oscillations, tout en utilisant une puissance de pompe supérieure. Ainsi, en partant d'un système de transmission dans lequel on injecte dons une fibre PSCF une pompe d'une puissance de 1 W, on peut ajouter un isolateur et un tronçon de fibre en amont, d'une longueur de l'ordre de 14 km, pour injecter une pompe d'une puissance de 2 W. Comme dans l'exemple précédent, on peut procéder par itérations, et ajouter plus d'un tronçon.

Le nombre d'isolateurs n'est pas limité à un comme dans l'exemple de la figure 3. La perte d'insertion des isolateurs est typiquement de l'ordre de 0,5 dB, pour des isolateurs à double étage présentant un coefficient de réflexion de l'ordre de - 40 dB. On peut donc concevoir des systèmes de transmission à pompe de forte puissance de pompe, qui présentent plus d'un isolateur.

La fibre utilisée n'est pas non plus nécessairement la même dans chacun des tronçons du système de transmission; de fait, comme expliqué plus haut, la condition d'oscillation dépend de la longueur de chaque tronçon, mais aussi de la nature de la fibre.

L'invention a été décrite en référence à un système de transmission à fibre optique sans répéteur; elle s'applique toutefois aussi à des systèmes de transmission à répéteurs, dans lesquels on met en oeuvre une amplification distribuée par effet Raman. On peut dons ce cas mettre en oeuvre l'invention de la même façon, en prévoyant entre des répéteurs des tronçons distincts de fibre de ligne, séparés par des isolateurs. On entend dons une telle configuration par "côté émetteur" le répéteur en amont, et par "côté récepteur" le répéteur en aval.

**Revendications**

1. Un système de transmission par fibre optique, comprenant de la fibre de ligne et des moyens de pompage (5) co-propagatif pour une amplification distribuée par diffusion Raman stimulée dans la fibre de ligne, dans lequel la fibre de ligne présente au moins deux tronçons (7, 8) séparés par un isolateur (11), **caractérisé en ce que** la longueur de chacun des tronçons, la puissance de la pompe et la nature de la fibre sont choisies de sorte à satisfaire dans chaque tronçon :

$$(Ra)^2 * (Gr)^2 \leq 1$$

   où Ra est le coefficient de réflexion Rayleigh du tronçon et Gr est le gain Raman apporté au signal dans le tronçon.

2. Le système selon la revendication 1, **caractérisé en ce que** les moyens de pompage (5) sont disposés côté émetteur.

3. Le système selon l'une des revendications 1 ou 2, **caractérisé en ce qu'**un isolateur présente un coefficient de réflexion inférieur au coefficient de réflexion Rayleigh du tronçon de fibre immédiatement en aval.

4. Le système selon l'une des revendications 1 à 3, **caractérisé en ce que** les isolateurs sont des isolateurs à double étage.

**Patentansprüche**

1. System für die Übertragung über optische Faser, mit Leitungsfaser und gleichläufigen Pumpmitteln (5) für eine verteilte Verstärkung durch stimulierte Ramanstreuung in der Leitungsfaser, bei dem die Leitungsfaser wenigstens zwei durch einen Isolator (11) getrennte Abschnitte (7, 8) aufweist, **dadurch gekennzeichnet, dass** die Länge eines jeden dieser Abschnitte, die Leistung der Pumpe und die Art der Faser so gewählt sind, dass in jedem Abschnitt

$$(Ra)^2*(Gr)^2 \leq 1$$

   erfüllt ist, wobei Ra der Rayleigh-Reflexionskoeffizient des Abschnitts und Gr die Raman-Verstärkung des Signals in dem Abschnitt sind.

2. System nach Anspruch 1, **dadurch gekennzeichnet, dass** die Pumpmittel (5) senderseitig angeordnet sind.

3. System nach einem der Ansprüche 1 oder 2, **dadurch gekennzeichnet, dass** ein Isolator einen kleineren Reflexionskoeffizienten als den Rayleigh-Reflexionskoeffizienten des unmittelbar nachfolgenden Faserabschnitts aufweist.

4. System nach einem der Ansprüche 1 bis 3. **dadurch gekennzeichnet, dass** die Isolatoren zweistufige Isolatoren sind.

**Claims**

1. A fibre optic transmission system including line fibre and co-propagating pump means (5) for distributed amplification by stimulated Raman scattering in the line fibre, wherein the line fibre includes at least two fibre segments (7, 8) separated by an isolator (11) **characterized in that** the length of each fibre segment, the power of the pump and the nature of the fibre are chosen to satisfy in each fibre segment the condition:

$$(Ra)^2 * (Gr)^2 \leq 1$$

   where Ra is the Rayleigh reflection coefficient of the segment of the fibre and Gr is the Raman gain applied to the signal in the fibre segment.

2. A system according to claim 1, **characterized in that** the pump means (5) are at the transmitter end.

3. A system according to either claim 1 or claim 2, **characterized in that** an isolator has a reflection coefficient less than the Rayleigh reflection coefficient of the immediately downstream fibre segment.

4. A system according to any of claims 1 to 3, **characterized in that** the isolators are two-stage isolators.

Coefficient de diffusion
Rayleigh (dB)

FIG_1

Gain Raman(dB)

- 1W
- 2W
- 3W
- 4W
- 5W

FIG_2

FIG_3